(19)

Europäisches
Patentamt
European
Patent Office
Office européen
des brevets

(11)  **EP 3 418 651 A1**

(12)  **EUROPEAN PATENT APPLICATION**
published in accordance with Art. 153(4) EPC

(43) Date of publication:
26.12.2018 Bulletin 2018/52

(21) Application number: 17753327.0

(22) Date of filing: 17.02.2017

(51) Int Cl.:
*F25B 1/00* (2006.01)          *C09K 5/04* (2006.01)
*F25B 1/053* (2006.01)

(86) International application number:
**PCT/JP2017/005955**

(87) International publication number:
**WO 2017/142072 (24.08.2017 Gazette 2017/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.02.2016 JP 2016029559**

(71) Applicant: **AGC INC.**
**Chiyoda-ku,**
**Tokyo 1008405 (JP)**

(72) Inventors:
• **FUKUSHIMA Masato**
**Tokyo 100-8405 (JP)**
• **TAKAGI Hirokazu**
**Tokyo 100-8405 (JP)**

(74) Representative: **Müller-Boré & Partner**
**Patentanwälte PartG mbB**
**Friedenheimer Brücke 21**
**80639 München (DE)**

(54)  **HEAT CYCLE SYSTEM AND HEAT CYCLE METHOD USING SAME**

(57)     There are provided a heat cycle system that uses a system for heat cycle designed to use 1,1,1,3,3-pentafluoropropane (HFC-245fa) as a working fluid as it is and is thereby excellent in economic efficiency, and is equal to or higher in cycle performance and lower in environmental burden than in the case of using HFC-245fa, and a heat cycle method using the heat cycle system. The heat cycle system includes a working fluid and a system for heat cycle, the system for heat cycle is suitable for HFC-245fa being used as a working fluid, and the working fluid contains 1-chloro-2,3,3,3-tetrafluoropropene, and the heat cycle method uses the heat cycle system.

FIG. 3

**Description**

FIELD

The present invention relates to a heat cycle system and a heat cycle method using the heat cycle system.

BACKGROUND

In this specification, for halogenated hydrocarbon, an abbreviated name of a compound is described between parentheses after the compound name, and the abbreviated name is used in place of the compound name as needed in this specification.

Conventionally, chlorofluorocarbon (CFC) or hydrochlorofluorocarbon (HCFC) has been used as a working fluid for heat cycle system such as a refrigerant for refrigerator, a refrigerant for air-conditioning apparatus, a working fluid for power generating system (waste heat recovery power-generation or the like), a working fluid for latent heat transport apparatus (heat pump or the like), or a secondary cooling medium. However, CFC and HCFC are pointed out as exerting influence on the ozone layer in the stratosphere, and is a subject to regulation at present, and therefore hydrofluorocarbon (HFC) exerting less influence on the ozone layer has become to be used, in place of CFC and HCFC, as the working fluid for heat cycle.

For example, in a centrifugal refrigerator used for cooling and heating building, in a cold-water producing plant for industry, the working fluid to be used is changed from trichlorofluoromethane (CFC-11) to 1,1,1,2-tetrafluoroethane (HFC-134a), 1,1,1,3,3-pentafluoropropane (HFC-245fa) or the like.

Here, a loading amount of the working fluid in the centrifugal refrigerator is larger than that in other refrigerators or a heat pump, so that if leakage of the working fluid occurs due to an accident or the like, a large amount of the working fluid is possibly released into the atmosphere. Accordingly, the working fluid used in the centrifugal refrigerator is required to be low, in particular, in global warming potential (GWP). However, the GWP of HFC is, for example, as high as 1430 in HFC-134a and is as high as 1030 in HFC-245fa, and a working fluid having low GWP is required as a working fluid replacing the above working fluid.

Recently, hydrofluoroolefin (HFO), hydrochlorofluoroolefin (HCFO), chlorofluoroolefin (CFO) and so on, each having a carbon-carbon double bond that is likely to be decomposed by OH radicals in the atmosphere, are greatly expected as the working fluid exerting less influence on the ozone layer and having low GWP. In this specification, saturated HFC is called HFC unless otherwise stated and used in distinction from HFO. Further, HFC may be specified as saturated hydrofluorocarbon in some cases.

Among them, HCFO and CFO are compounds suppressed in flammability because they are high in proportion of halogen in one molecule, and are considered to be used as a working fluid exerting a lower on the environment and suppressed in flammability. For example, a working fluid using 1-chloro-2,3,3,3-tetrafluoropropene (HCFO-1224yd) is disclosed in Patent Reference 1. However, Patent Reference 1 does not disclose an example in which HCFO-1224yd is applied to a concrete heat cycle system.

PRIOR ART DOCUMENT

PATENT REFERENCE

[Patent Reference 1] International Publication WO 2012/157763

SUMMARY OF THE INVENTION

PROBLEMS TO BE SOLVED BY THE INVENTION

An object of the present invention is to provide a heat cycle system that uses a system for heat cycle designed to use HFC-245fa as a working fluid as it is and is thereby excellent in economic efficiency, and is equal to or higher in cycle performance and lower in environmental burden than in the case of using HFC-245fa, and a heat cycle method using the heat cycle system that is excellent in economic efficiency, and is equal to or higher in cycle performance and lower in environmental burden than in the case of using HFC-245fa.

MEANS OF SOLVING THE PROBLEMS

The present invention provide a heat cycle system and a heat cycle method having the following configuration.

[1] A heat cycle system including a working fluid and a system for heat cycle, wherein the system for heat cycle is suitable for 1,1,1,3,3-pentafluoropropane (HFC-245fa) being used as a working fluid, and the working fluid contains 1-chloro-2,3,3,3 -tetrafluoropropene (HCFO-1224yd).

[2] The heat cycle system according to [1], wherein a ratio of HCFO-1224yd to the working fluid is 40 to 100 mass%.

[3] The heat cycle system according to [1] or [2], wherein the working fluid consists of HCFO-1224yd.

[4] The heat cycle system according to any one of [1] to [3], wherein a ratio of (Z)-1-chloro-2,3,3,3-tetrafluoropropene (HCFO-1224yd (Z)) and (E)-1-chloro-2,3,3,3-tetrafluoropropene (HCFO-1224yd (E)) in the HCFO-1224yd is 50:50 to 100:0 by mass ratio represented by HCFO-1224yd (Z):HCFO-1224yd (E).

[5] The heat cycle system according to [4], wherein the HCFO-1224yd consists of HCFO-1224yd (Z).

[6] The heat cycle system according to any one of [1] to [5], wherein the heat cycle system is a refrigerating apparatus, an air-conditioning apparatus, a power generating system, a heat transport apparatus, or a secondary cooling machine.

[7] The heat cycle system according to any one of [1] to [5], wherein the heat cycle system is a centrifugal refrigerator.

[8] The heat cycle system according to any one of [1] to [5], wherein the heat cycle system is a low-pressure centrifugal refrigerator.

[9] A heat cycle method using the heat cycle system according to any one of [1] to [8].

EFFECT OF THE INVENTION

A heat cycle system of the present invention is a heat cycle system that uses a system for heat cycle designed to use HFC-245fa as a working fluid as it is and is thereby excellent in economic efficiency, and is equal to or higher in cycle performance and lower in environmental burden, in particular, GWP than in the case of using HFC-245fa. A heat cycle method of the present invention is a heat cycle method that uses the heat cycle system of the present invention and is thereby excellent in economic efficiency, and is equal to or higher in cycle performance and lower in environmental burden, in particular, GWP than in the case of using HFC-245fa.

BRIEF DESCRIPTION OF THE DRAWINGS

Fig. 1 is a schematic configuration diagram illustrating an example of a refrigeration cycle system that evaluates a working fluid used in a heat cycle system of the present invention.

Fig. 2 is a cycle chart illustrating a change of state of the working fluid in the refrigeration cycle system in Fig. 1 on a pressure-enthalpy line diagram.

Fig. 3 is a schematic configuration diagram illustrating a centrifugal refrigerator being one example of the heat cycle system of the present invention.

DETAILED DESCRIPTION

Hereinafter, an embodiment of the present invention will be described.

In this specification, a "system for heat cycle" means a system for a heat cycle designed to allow heat exchange (heat cycle) to be performed between a working fluid and a matter other than the working fluid by the working fluid flowing through the system. Besides, a "heat cycle system" means a system including the working fluid and the system for heat cycle, which is brought into a state where the heat cycle can be performed by putting the working fluid into the system for heat cycle.

[Heat cycle system]

The heat cycle system of the present invention is a heat cycle system including a working fluid and a system for heat cycle, in which a system for heat cycle suitable to use HFC-245fa as the working fluid is employed as the system for heat cycle and a working fluid containing HCFO-1224yd is used as the working fluid. The heat cycle system of the present invention is, for example, a heat cycle system which can be obtained by replacing HFC-245fa by a working fluid containing HCFO-1224yd, in a heat cycle system including HFC-245fa as the working fluid.

As the system for heat cycle used in the present invention is not particularly limited as long as it is a system for heat cycle designed to allow HFC-245fa to be applied thereto as the working fluid. When the working fluid containing HCFO-1224yd is used as the working fluid in place of HFC-245fa for the system for heat cycle to which HFC-245fa is applicable as the working fluid, the heat cycle system obtained can exhibit a cycle performance equal to or higher than in the case of using HFC-245fa as described below. Further, HCFO-1224yd used as the working fluid has a low GWP, and thus the burden on the environment is low even when leakage of the working fluid occurs.

<Working fluid>

In the heat cycle system of the present invention, the working fluid contains HCFO-1224yd. The working fluid may contain later-described arbitrary components as needed in addition to HCFO-1224yd. A content ratio of HCFO-1224yd to 100 mass% of the working fluid is preferably 40 to 100 mass%, more preferably 60 to 100 mass%, and furthermore preferably 80 to 100 mass%, and most preferably the working fluid consists of HCFO-1224yd. However, depending on a production process, a certain quantity of impurity is contained in HCFO-1224yd in some cases. In present invention, such a case is assumed to fall within a category of "consist of HCFO-1224yd". A content ratio of the impurity is preferably, for example, less than 1 mass% with respect to 100 mass% of HCFO-1224yd and the impurity.

(HCFO-1224yd)

HCFO-1224yd has, in its molecule, halogen suppressing flammability and a carbon-carbon double bond that is likely to be decomposed by OH radicals in the atmosphere. Characteristics of HCFO-1224yd as the working fluid, particularly, boiling point, cycle performance, GWP, and thermal stability are listed in Table 1 in relative comparison with HFC-245fa.

In HCFO-1224yd, two geometric isomers such as an E-isomer (HCFO-1224yd (E)) and a Z-isomer (HCFO-1224yd (Z)) exist. In this specification, HCFO-1224yd without the notation of (E) or (Z) indicates HCFO-1224yd (E) or HCFO-1224yd (Z), or a mixture of HCFO-1224yd (E) and HCFO-1224yd (Z) at an arbitrary ratio. Hereinafter, other compounds having a double bond in a molecule and containing an E-isomer and a Z-isomer are similarly expressed. In Table 1, characteristics of HCFO-1224yd (Z) representing HCFO-1224yd.

The cycle performance is expressed by the coefficient of performance and the refrigerating capacity found by later-described methods. The coefficient of performance and the refrigerating capacity of HCFO-1224yd are indicated by relative values (hereinafter, referred to as a "relative coefficient of performance" and a "relative refrigerating capacity" respectively) using those of HFC-245fa as references (1.00). The thermal stability is expressed by an acid content generation amount (an amount of acid content generated with respect to a sample before heating; ppm) measured by the neutralization titration method after heating at 175°C and for 14 days. The GWP is the value over 100 years mentioned in the Intergovernmental Panel on Climate Change (IPCC) Fourth Assessment Report (2007), or measured according to the method. In the specification, GWP means this value unless otherwise stated.

[Table 1]

| Compound | HFC-245fa | HCFO-1224yd(Z) |
|---|---|---|
| Boiling point (°C) | 14.9 | 15.0 |
| Relative refrigerating capacity | 1.00 | 1.01 |
| Relative coefficient of performance | 1.00 | 1.01 |
| Thermal stability (ppm) | 1 or less | 1 or less |
| GWP | 1030 | 5.3 |

It is found from Table 1 that the cycle performance and the thermal stability of HCFO-1224yd (Z) are almost equal to those of HFC-245fa. Further, the GWP of HCFO-1224yd (Z) is extremely low as compared with the GWP of HFC-245fa.

HCFO-1224yd (Z) is high in chemical stability than HCFO-1224yd (E) and is thus preferable as the working fluid. Therefore, as for the ratio of HCFO-1224yd (Z) and HCFO-1224yd (E) in HCFO-1224yd, the mass ratio expressed by HCFO-1224yd (Z):HCFO-1224yd (E) is preferably 50:50 to 100:0, and more preferably 70:30 to 100:0. HCFO-1224yd particularly preferably consists of HCFO-1224yd (Z).

When HCFO-1224yd (Z):HCFO-1224yd (E) is the aforementioned lower limit value or more, namely, the ratio of HCFO-1224yd (Z) to 100 mass% in total of HCFO-1224yd (Z) and HCFO-1224yd (E) is 50 mass% or more, a working fluid stable for a longer period is obtained because HCFO-1224yd contains much HCFO-1224yd (Z).

From the viewpoint of performance as the working fluid as described above, HCFO-1224yd is preferably composed of only HCFO-1224yd (Z). However, from the viewpoint of suppressing an increase in production cost due to distillation separation or the like of HCFO-1224yd into the E-isomer and the Z-isomer, a certain quantity of HCFO-1224yd (E) with respect to 100 mass% in total of HCFO-1224yd (Z) and HCFO-1224yd (E) may be contained.

(Evaluation method of cycle performance)

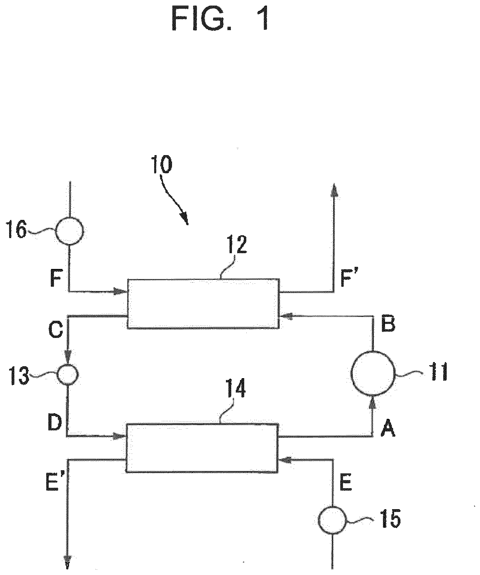

The cycle performance (coefficient of performance (COP), refrigerating capacity (Q)) of the working fluid can be evaluated, for example, using a refrigeration cycle system whose schematic configuration diagram is illustrated in Fig. 1.

The refrigeration cycle system 10 illustrated in Fig. 1 is a system schematically constituted including: a compressor 11 that compresses working fluid vapor A to make it into working fluid vapor B at high temperature and high pressure; a condenser 12 that cools and liquefies the working fluid vapor B emitted from the compressor 11 to make it into a working fluid C at low temperature and high pressure; an expansion valve 13 that expands the working fluid C emitted from the condenser 12 to make it into a working fluid D at low temperature and low pressure; an evaporator 14 that heats the working fluid D emitted from the expansion valve 13 to make it into the working fluid vapor A at high temperature and low pressure; a pump 15 that supplies load fluid E to the evaporator 14; and a pump 16 that supplies fluid F to the condenser 12.

In the refrigeration cycle system 10, the cycle of the following (i) to (iv) is repeated.

(i) Compressing the working fluid vapor A emitted from the evaporator 14, in the compressor 11 to make it into the working fluid vapor B at high temperature and high pressure (hereinafter, referred to as an "AB process").
(ii) Cooling and liquefying the working fluid vapor B emitted from the compressor 11, by the fluid F in the condenser 12 to make it into the working fluid C at low temperature and high pressure. In this event, the fluid F is heated to be made into fluid F' and emitted from the condenser 12 (hereinafter, referred to as a "BC process").
(iii) Expanding the working fluid C emitted from the condenser 12, in the expansion valve 13 to make it into the working fluid D at low temperature and low pressure (hereinafter, referred to as a "CD process").
(iv) Heating the working fluid D emitted from the expansion valve 13, by the load fluid E in the evaporator 14 to make it into the working fluid vapor A at high temperature and low pressure. In this event, the load fluid E is cooled to be made into load fluid E' and emitted from the evaporator 14 (hereinafter, referred to as a "DA process").

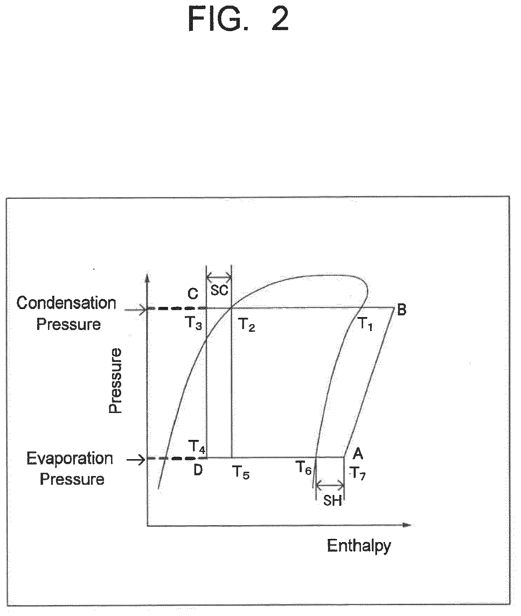

The refrigeration cycle system 10 is a cycle system realized by an adiabatic and isoentropic change, an isenthalpic change, and an isobaric change. The change of state of the working fluid can be expressed as a trapezoid having A, B, C, D as vertices when the change is illustrated on a pressure-enthalpy line (curve) diagram illustrated in Fig. 2.

The AB process is a process of performing adiabatic compression in the compressor 11 to make the working fluid vapor A at high temperature and low pressure into the working fluid vapor B at high temperature and high pressure, and is denoted by an AB line in Fig. 2. As will be described later, the working fluid vapor A is introduced, in a superheated state, into the compressor 11, and therefore the working fluid vapor B to be obtained therein is vapor also in a superheated state.

The BC process is a process of performing isobaric cooling in the condenser 12 to make the working fluid vapor B at high temperature and high pressure into the working fluid vapor C at low temperature and high pressure, and is denoted by a BC line in Fig. 2. The pressure in this event is the condensation pressure. An intersection point $T_1$ on a high enthalpy side of intersection points of the pressure-enthalpy line and the BC line is a condensation temperature, and an intersection point $T_2$ on a low enthalpy side is a condensation boiling temperature.

The CD process is a process of performing isenthalpic expansion in the expansion valve 13 to make the working fluid C at low temperature and high pressure into the working fluid D at low temperature and low pressure, and is denoted by a CD line in Fig. 2. Note that when the temperature of the working fluid C at low temperature and high pressure is expressed by a temperature $T_3$, $T_2 - T_3$ is a degree of supercooling (SC) of the working fluid in the cycle of (i) to (iv).

The DA process is a process of performing isobaric heating in the evaporator 14 to return the working fluid D at low temperature and low pressure to the working fluid vapor A at high temperature and low pressure, and is denoted by a DA line in Fig. 2. The pressure in this event is the evaporation pressure. An intersection point $T_6$ on a high enthalpy side of intersection points of the pressure-enthalpy line and the DA line is an evaporation temperature. When the temperature of the working fluid vapor A is expressed by a temperature $T_7$, $T_7 - T_6$ is a degree of superheating (SH) of the working fluid in the cycle of (i) to (iv). Note that $T_4$ indicates the temperature of the working fluid D.

The refrigerating capacity (Q) and the coefficient of performance (COP) of the working fluid are found respectively from the following Expressions (1) and (2) when using enthalpies $h_A$, $h_B$, $h_C$ and $h_D$ in respective states of A (after evaporation, at high temperature and low pressure), B (after compression, at high temperature and high pressure), C (after condensation, at low temperature and high pressure), and D (after expansion, at low temperature and low pressure) of the working fluid. It is assumed that there is no loss due to equipment efficiency and no pressure loss in pipes and heat exchangers.

The thermodynamic property required for calculation of the cycle performance of the working fluid can be calculated based on a generalized state equation (Soave-Redlich-Kwong equation) based on a principle of corresponding states, and on thermodynamic relational expressions. When the characteristic value cannot be obtained, calculation is performed using an estimation method based on an atomic group contribution method.

$$Q = h_A - h_D \qquad \qquad \dots (1)$$

$$COP = Q/\text{compression work} = (h_A - h_D)/(h_B - h_A) \qquad \qquad \dots (2)$$

Q expressed by the above ($h_A$ - $h_D$) corresponds to an output (kW) of the refrigeration cycle, and the compression work expressed by ($h_B$ - $h_A$), for example, electric energy required to operate the compressor corresponds to consumed motive power (kW). Besides, Q means the capability of refrigerating the load fluid, and a higher Q means that the same system can perform a larger amount of work. In other words, having a high Q indicates that a target performance can be obtained by a small amount of working fluid, thus enabling downsizing of the system.

Note that the above description is based on the numerical values when the evaluation is made at the following temperatures as temperature conditions of the refrigeration cycle.

Evaporation temperature; 5°C (however, an average temperature of an evaporation start temperature and an evaporation completion temperature in the case of a zeotropic mixture)

Condensation completion temperature; 40°C (however, an average temperature of a condensation start temperature and a condensation completion temperature in the case of a zeotropic mixture)

Degree of supercooling (SC); 5°C

Degree of superheating (SH); 5°C

(Arbitrary components)

The working fluid used in the present invention may arbitrarily contain a compound normally used as the working fluid in a range without impairing the effects of the present invention, in addition to HCFO-1224yd. Examples of the arbitrary compound (arbitrary component) include HFC, HFO, HCFO other than HCFO-1224yd, and other components other than them and vaporizing and liquefying together with HCFO-1224yd. As the arbitrary component, HFC, HFO, and HCFO other than HCFO-1224yd are preferable.

The arbitrary component is preferably a compound that keeps the GWP within an allowable range, while having an action of further enhancing the relative coefficient of performance and the relative refrigerating capacity in a range where when it is combined with HCFO-1224yd to form a working fluid, the working fluid is applicable, in place of HFC-245fa, to the system for heat cycle designed for HFC-245fa. When the working fluid contains the above compound in the combination with HCFO-1224yd, a better cycle performance can be obtained while the GWP is kept low.

HFC being the arbitrary component is preferably selected from the above viewpoint. Here, HFC is known to be higher in GWP than HCFO-1224yd. Accordingly, HFC to be combined with HCFO-1224yd is appropriately selected from the viewpoint that the cycle performance as the working fluid is enhanced and the GWP is kept in an allowable range.

As HFC exerting less influence on the ozone layer and less influence on global warming, concretely, HFC having 1 to 5 carbon atoms is preferable. HFC may be linear, branched, or cyclic.

Examples of HFC include difluoromethane, difluoroethane, trifluoroethane, tetrafluoroethane, pentafluoroethane, pentafluoropropane, hexafluoropropane, heptafluoropropane, pentafluorobutane, heptafluorocyclopentane and so on.

Among them, as HFC, 1,1,2,2-tetrafluoroethane, HFC-134a, HFC-245fa, 1,1,1,3,3-pentafluorobutane (HFC-365mfc) are more preferable, and HFC-134a, HFC-245fa, and HFC-365mfc are furthermore preferable, in terms of exerting less influence on the ozone layer and being excellent in refrigeration cycle characteristics. As for HFC, one kind may be used independently, or two or more kinds may be used in combination.

A content ratio of HFC in the working fluid (100 mass%) used in the present invention is set to a range of 1 to 60 mass%, for example, in the case of HFC-245fa, thereby making it possible to enhance the refrigerating capacity without causing a decrease in coefficient of performance of the working fluid. Here, since the GWP of HFC-245fa is as high as 1030, its content ratio is appropriately adjusted in consideration of the GWP as the working fluid in the range of the above content ratio. Also in the case of using HFC other than HFC-245fa, its content can be appropriately controlled according to the GWP and the cycle performance required of the working fluid.

(HFO)

Also HFO is preferably selected from the similar viewpoint as that of HFC. Note that the GWP of HFO is several orders of magnitude lower than that of HFC. Accordingly, it is preferable to appropriately select HFO to be combined with HCFO-1224yd while considering enhancement of the cycle performance as the working fluid rather than considering the GWP

Examples of HFO include 2,3,3,3-tetrafluoropropene (HFO-1234yf), 1,2-difluoroethylene (HFO-1132), 2-fluoropropene (HFO-1261yf), 1,1,2-trifluoropropene (HFO-1243yc), (E)-1,2,3,3,3-pentafluoropropene (HFO-1225ye (E)), (Z)-1,2,3,3,3-pentafluoropropene (HFO-1225ye (Z)), (E)-1,3,3,3-tetrafluoropropene (HFO-1234ze (E)), (Z)-1,3,3,3-tetrafluoropropene (HFO-1234ze (Z)), 3,3,3-trifluoropropene (HFO-1243zf), (E)-1,1,1,4,4,4-hexafluoro-2-butene (HFO-1336mzz (E)), and (Z)-1,1,1,4,4,4-hexafluoro-2-butene (HFO-1336mzz (Z)).

As HFO, HFO-1234yf, HFO-1234ze (E), HFO-1234ze (Z), HFO-1336mzz (Z), and HFO-1243zf are preferable, and HFO-1234yf, HFO-1234ze (E), HFO-1234ze (Z), and HFO-1336mzz (Z) are more preferable. As for HFO, one kind may be used independently, or two or more kinds may be used in combination.

(HCFO other than HCFO-1224yd)

Also HCFO as the arbitrary component other than HCFO-1224yd is preferably selected from the same viewpoint as that of HFC. Note that as long as the arbitrary component is HCFO even if it is other than HCFO-1224yd, its GWP is several orders of magnitude lower than that of HFC. Accordingly, it is preferable to appropriately select HCFO other than HCFO-1224yd to be combined with HCFO-1224yd while considering enhancement of the cycle performance as the working fluid rather than considering the GWP.

Examples of HCFO other than HCFO-1224yd include 1-chloro-2,2-difluoroethylene (HCFO-1122), 1,2-dichlorofluoroethylene (HCFO-1121), 1-chloro-2-fluoroethylene (HCFO-1131), 2-chloro-3,3,3-trifluoropropene (HCFO-1233xf), and 1-chloro-3,3,3-trifluoropropene (HCFO-1233zd).

Among them, as HCFO other than HCFO-1224yd, HCFO-1233zd is preferable in terms of having high critical temperature and being excellent in durability and coefficient of performance. As for HCFO other than HCFO-1224yd, one kind may be used independently, or two or more kinds may be used in combination.

(Other arbitrary components)

The working fluid used in the heat cycle system of the present invention may contain, other than the above arbitrary components, carbon dioxide, hydrocarbon, chlorofluoroolefin (CFO), and so on. As the other arbitrary components, components exerting less influence on the ozone layer and less influence on global warming are preferable.

Examples of hydrocarbon include propane, propylene, cyclopropane, butane, isobutane, pentane, isopentane and so on. As for hydrocarbon, one kind may be used independently, or two or more kinds may be used in combination.

When the working fluid contains hydrocarbon, its content ratio is preferably less than 10 mass% with respect to 100 mass% of the working fluid, more preferably 5 mass% or less, and furthermore preferably 3 mass% or less. When hydrocarbon is contained, the solubility of a mineral-based lubricating oil to the working fluid becomes better.

Examples of CFO include chlorofluoropropene, chlorofluoroethylene and so on. In terms of easily suppressing the flammability of the working fluid without greatly decreasing the cycle performance of the working fluid, 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112) are preferable as CFO. As for CFO, one kind may be used independently, or two or more kinds may be used in combination.

When the working fluid contains CFO, its content ratio is preferably less than 10 mass% with respect to 100 mass% of the working fluid, more preferably 8 mass% or less, and furthermore preferably 5 mass% or less. When CFO is contained, the flammability of the working fluid is easily suppressed. When the content ratio of CFO is the upper limit value or less, excellent cycle performance is easily obtained.

When the working fluid contains the other arbitrary components as described above, the total content ratio of the other arbitrary components in the working fluid is preferably less than 10 mass% with respect to 100 mass% of the working fluid, more preferably 8 mass% or less, and furthermore preferably 5 mass% or less.

<Working fluid composition>

The working fluid can be normally mixed with a lubricating oil and used as a working fluid composition when applied to the heat cycle system. The working fluid composition may contain publicly-known additives such as a stabilizer, a leakage detection material and so on in addition to them.

(Lubricating oil)

As the lubricating oil, a publicly-known lubricating oil conventionally used in the working fluid composition together with the working fluid composed of halogenated hydrocarbon can be employed without any limitation. Concrete examples of the lubricating oil include an oxygen-containing synthetic oil (ester-based lubricating oil, ether-based lubricating oil and so on), a fluorine-based lubricating oil, a mineral-based lubricating oil, a hydrocarbon-based synthetic oil and so on.

Examples of the ester-based lubricating oil include a dibasic acid ester oil, a polyol ester oil, a complex ester oil, a polyol carbonate ester oil and so on.

Examples of the ether-based lubricating oil include a polyvinylether oil and a polyoxyalkylene oil such as a polyglycol oil.

Examples of the fluorine-based lubricating oil include a compound made by substituting a hydrogen atom of a synthetic oil (later-described mineral oil, poly-$\alpha$-olefin, alkylbenzene, alkylnaphthalene or the like) with a fluorine atom, a perfluoropolyether oil, a fluorinated silicone oil and so on.

Examples of the mineral-based lubricating oil include a paraffin-based mineral oil, a naphthene-based mineral oil and so on made by refining a lubricating oil distillate obtained by subjecting a crude oil to atmospheric distillation or reduced-pressure distillation, appropriately combined with a refining treatment (solvent deasphalting, solvent extraction, hydrogenolysis, solvent dewaxing, catalytic dewaxing, hydrogenation refining,white clay treatment and so on).

Examples of the hydrocarbon-based synthetic oil include poly-$\alpha$-olefin, alkylbenzene, alkylnaphthalene and so on.

As for the lubricating oil, one kind may be used independently, or two or more kinds of them may be used in combination. As the lubricating oil, one or more kinds selected from a polyolester oil, a polyvinylether oil, and a polyglycol oil are preferable in terms of compatibility with the working fluid.

The addition amount of the lubricating oil only needs to fall within a range not significantly decreasing the effects of the present invention, and is preferably 10 to 100 parts by mass and more preferably 20 to 50 parts by mass with respect to 100 parts by mass of the working fluid.

(Stabilizer)

The stabilizer is a component for improving the stability of the working fluid against heat and oxidation. As the stabilizer, a publicly-known stabilizer used for the heat cycle system, for example, an oxidation resistance improver, a heat resistance improver, a metal deactivator or the like can be employed together with the working fluid conventionally composed of halogenated hydrocarbon, without any limitation.

Examples of the oxidation resistance improver and the heat resistance improver include N,N'-diphenyl-phenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol, 4,4'-methylenebis(2,6-di-t-butylphenol) and so on. As for the oxidation resistance improver and the heat resistance improver, one kind may be used independently, or two or more kinds may be used in combination.

Examples of the metal deactivator include imidazole, benzimidazole, 2-mercaptobenzothiazole, 2,5-dimethylcaptothiadiazole, salicylidine-propylenediamine, pyrazole, benzotriazole, tolutriazole, 2-methylbenzamidazole, 3,5-dimethylpyrazole, methylenebis-benzotriazole, organic acids or their esters, primary, secondary or tertiary aliphatic amine, an amine salt of an organic acid or an inorganic acid, a heterocyclic nitrogen containing compound, an amine salt of alkyl acid phosphate or their derivatives and so on.

The addition amount of the stabilizer only needs to fall within a range not significantly decreasing the effects of the present invention, and is preferably 5 parts by mass or less and more preferably 1 part by mass or less with respect to 100 parts by mass of the working fluid.

(Leakage detection material)

Examples of the leakage detection material include an ultraviolet fluorescence dye, an odor gas, an odor masking agent and so on. Examples of the ultraviolet fluorescence dye include publicly-known ultraviolet fluorescence dyes used for the heat cycle system together with the working fluid conventionally composed of halogenated hydrocarbon, such as those disclosed in US Patent No. 4249412, JP-A- H10-502737, JP-A- 2007-511645, JP-A- 2008-500437, and JP-A- 2008-531836.

Examples of the odor masking agent include publicly-known aroma chemicals used for the heat cycle system together with the working fluid conventionally composed of halogenated hydrocarbon, such as those disclosed in JP-A-2008-500437 and JP-A-2008-531836.

In the case of using the leakage detection material, a solubilizing agent for improving the solubility of the leakage detection material to the working fluid may be used.

Examples of the solubilizing agent include those disclosed in JP-A-2007-511645, JP-A- 2008-500437, and JP-A- 2008-531836.

The addition amount of the leakage detection material only needs to fall within a range not significantly decreasing the effects of the present invention, and is preferably 2 parts by mass or less and more preferably 0.5 parts by mass or less with respect to 100 parts by mass of the working fluid.

<Heat cycle system>

The heat cycle system of the present invention is obtained by applying the working fluid containing HCFO-1224yd, in place of HFC-245fa, to the system for heat cycle designed to allow HFC-245fa to be applied thereto. When applying the working fluid containing HCFO-1224yd to the system for heat cycle designed to allow HFC-245fa to be applied thereto, there is no change in the system for heat cycle. Note that the working fluid containing HCFO-1224yd may be contained in the heat cycle system as the above-described working fluid composition.

Examples of the system for heat cycle include a system for heat cycle designed to allow HFC-245fa to be applied thereto and including a compressor, and heat exchangers such as a condenser and an evaporator. The heat cycle system has a mechanism in which, for example, in a refrigeration cycle, a gaseous working fluid is compressed by the compressor and cooled by the condenser to produce liquid high in pressure, the liquid is decreased in pressure by the expansion valve and vaporized at low temperature by the evaporator to draw heat by vaporization heat. Since the working fluid containing HCFO-1224yd is almost equal in cycle performance to HFC-245fa as described above, the means such as the compressor and the heat exchangers such as the condenser and the evaporator to supply the working fluid to the heat cycle, included in the system for heat cycle designed to allow HFC-245fa to be applied thereto can be used without any change.

Hereinafter, concrete types of the heat cycle system of the present invention made by applying the working fluid containing HCFO-1224yd to the system for heat cycle designed to allow HFC-245fa to be applied thereto will be described.

The heat cycle system of the present invention may be a heat pump system utilizing hot heat obtained by the condenser or may be a refrigeration cycle system utilizing cold heat obtained by the evaporator. The heat cycle system of the present invention may be of a flooded evaporator system or may be a direct expansion system. In the heat cycle system of the present invention, the other matter other than the working fluid subjected to heat exchange with respect to the working fluid is preferably water or air.

Concrete examples of the heat cycle system of the present invention include a refrigerating apparatus, an air-conditioning apparatus, a power generating system, a heat transport apparatus, a secondary cooling machine, and so on. The heat cycle system of the present invention can stably exhibit the cycle performance even in a working environment at higher temperature, and therefore is preferably used as an air-conditioning apparatus, among them, which is often installed outdoors or the like. Further, the heat cycle system of the present invention is also preferably used as a refrigerating apparatus.

As the power generation system, a power generation system by Rankine cycle system is preferable. Concrete examples of the power generation system include a system in which a working fluid is heated in an evaporator by geothermal energy, solar heat, waste heat in a medium-to-high temperature range at about 50°C to 200°C, or the like, the vaporized working fluid in a high temperature and high pressure state is adiabatically expanded by an expansion machine, and a power generator is driven by the work generated by the adiabatic expansion to thereby perform power generation.

Further, the heat cycle system of the present invention may be a heat transport apparatus. As the heat transport apparatus, a latent heat transport apparatus is preferable. Examples of the latent heat transport apparatus include a heat pipe and a two-phase closed thermosiphon apparatus that conduct latent heat transport utilizing a phenomenon such as evaporation, boiling, or condensation of a working fluid enclosed in an apparatus. The heat pipe is applied to a relatively small-size cooling apparatus such as a cooling apparatus of a heat generation part of a semiconductor element and electronic equipment. The two-phase closed thermosiphon is widely utilized for a gas-gas heat exchanger, accelerating snow melting and preventing freezing of roads, and so on because it does not require a wig and its structure is simple.

Concrete examples of the refrigerating apparatus include showcases (a built-in showcase, a separate showcase, and so on), an industrial fridge-freezer, a vending machine, an ice making machine, and so on.

Concrete examples of the air-conditioning apparatus include a room air-conditioner, packaged air-conditioners (a store packaged air-conditioner, a building packaged air-conditioner, a plant packaged air-conditioner, and so on), a heat source equipment chilling unit, a gas engine heat pump, a train air-conditioning system, an automobile air-conditioning system, and so on.

Examples of the heat source equipment chilling unit include a volume compression refrigerator and a centrifugal refrigerator. Among them, the centrifugal refrigerator described below is preferable because it has a large amount of the working fluid to be filled and thus can more significantly provide the effects of the present invention.

Here, the centrifugal refrigerator is a refrigerator using a centrifugal compressor. The centrifugal refrigerator is one type of a vapor compression refrigerator, and is also called a turbo refrigerator ordinarily. The centrifugal compressor includes an impeller, and performs compression by discharging a working fluid to an outer peripheral portion using the rotating impeller. The centrifugal refrigerator is used in a cold water producing plant in a semiconductor factory, a petrochemical industry, and so on in addition to cooling and heating in an office building, district cooling and heating, and a hospital.

The centrifugal refrigerator may be either a low-pressure type or a high-pressure type, and is preferably to be a low-pressure centrifugal refrigerator. Incidentally, the low-pressure type means a centrifugal refrigerator using a working fluid to which High Pressure Gas Safety Act is not applied such as, CFC-11, 2,2-dichloro-1,1,1-trifluoroethane (HCFC-123), or HFC-245fa, namely, a working fluid that does not correspond to a "liquefied gas that has a pressure to be 0.2 MPa or higher at its normal temperature and whose pressure is currently 0.2 MPa or higher, or a liquefied gas whose temperature is 35°C or lower in the case where the pressure is 0.2 MPa or higher"

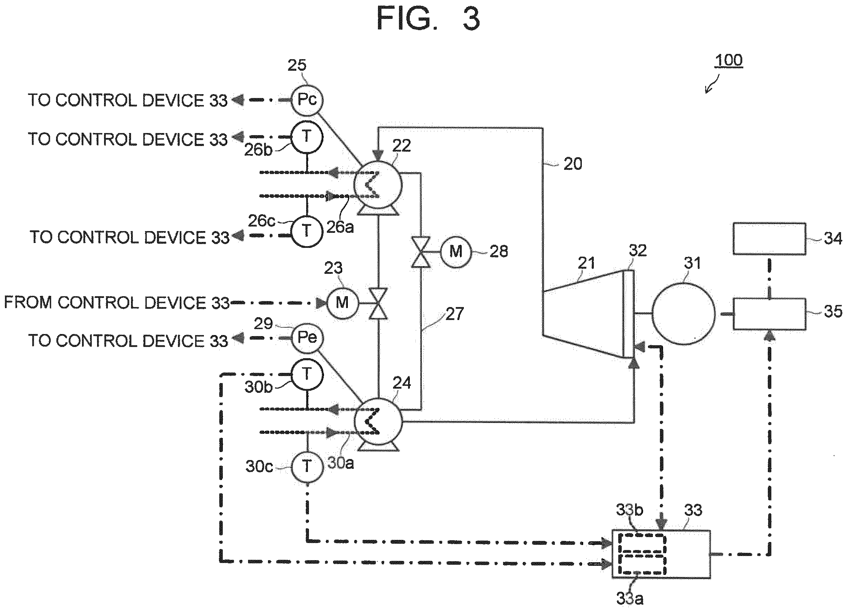

Hereinafter, an embodiment of the centrifugal refrigerator according to the present invention will be described using Fig. 3. Fig. 3 illustrates a schematic diagram of a centrifugal refrigerator 100. The centrifugal refrigerator 100 includes a centrifugal compressor (hereinafter, referred to as a "compressor") 21, a condenser 22 that condenses a high-pressure gas working fluid compressed by the compressor 21, an expansion valve 23 that expands a high-pressure liquid working fluid condensed by the condenser 22, and an evaporator 24 that evaporates a low-pressure liquid working fluid expanded by the expansion valve 23.

The working fluid contained in the centrifugal refrigerator 100 is the above-described working fluid containing HCFO-1224yd. The working fluid circulates, in a state of a gas phase or a liquid phase such as a high-pressure gas, a high-pressure liquid, a low-pressure liquid, through a working fluid pipe 20 arranged to connect the compressor 21, the condenser 22, the expansion valve 23, the evaporator 24, and the compressor 21 in this order. An arrow illustrated together with a solid line indicating the working fluid pipe 20 denotes the direction of flow of the working fluid. The working fluid may be put into the centrifugal refrigerator 100 as a working fluid composition containing the working fluid.

The compressor 21 includes a centrifugal impeller driven to rotate by an electric motor 31. The centrifugal impeller is, for example, a two-stage compression type. However, the centrifugal impeller may be a one-stage compression type or may be a three or more-stage compression type. At a working fluid inlet of the compressor 21, an inlet vane 32 is provided which adjusts the working fluid flow rate. The opening degree of the inlet vane 32 is controlled by a control device 33.

An input frequency from a power supply 34 is changed by an inverter 35, whereby the number of rotation of the electric motor 31 is controlled. An instruction frequency sent from the inverter 35 to the electric motor 31 is changed by a rotation number control unit 33a provided in the control device 33. One-dotted chain line in Fig. 3 denotes a path of an electric signal, and an arrow indicated together with the path (one-dotted chain line) denotes the direction of the signal.

The condenser 22 is provided with a pressure sensor 25 that measures a working fluid pressure (condensation pressure) Pc in the condenser 22. The output of the pressure sensor 25 is inputted into the control device 33. The condenser 22 is further provided with a hot-water acquirer 26a that heat-changes with the working fluid in the condenser 22 to acquire hot water. The hot-water acquirer 26a has a hot-water outlet temperature sensor 26b provided at a hot-water outlet and a hot-water inlet temperature sensor 26c provided at a hot-water inlet. The output of the hot-water outlet temperature sensor 26b (hot-water outlet temperature) and the output of the hot-water inlet temperature sensor 26c (hot-water inlet temperature) are inputted into the control device 33.

The centrifugal refrigerator 100 uses water as a matter to be heat-exchanged with the working fluid in the above manner. In Fig. 3, the hot-water acquirer 26a is denoted by a dotted line, and the direction of the hot water flowing through the hot-water acquirer 26a is denoted by an arrow on the dotted line. Further, a following cold-water acquirer 30a is similarly indicated.

The opening degree of the expansion valve 23 is controlled by an expansion valve opening degree control unit 33b provided inside the control device 33. Between the condenser 22 and the evaporator 24, a hot-gas bypass pipe 27 is provided. Through the hot-gas bypass pipe 27, a working fluid gas at high pressure existing in the condenser 22 is made to flow to the evaporator 24. The hot-gas bypass pipe 27 is provided with a hot-gas bypass valve 28. Adjusting the opening degree of the hot-gas bypass valve 28 adjusts the flow rate of the working fluid flowing through the hot-gas bypass pipe 27 to ensure the flow rate of the working fluid gas sucked into the compressor 21 at the time of low refrigerating capacity.

The evaporator 24 is provided with a pressure sensor 29 that measures a working fluid pressure (evaporation pressure) Pe in the evaporator 24. The output of the pressure sensor 29 is inputted into the control device 33. Further, the evaporator 24 is provided with the cold-water acquirer 30a that heat-changes with the working fluid in the evaporator 24 to acquire cold water. The cold-water acquirer 30a has a cold-water outlet temperature sensor 30b provided at a cold-water outlet and a cold-water inlet temperature sensor 30c provided at a cold-water inlet. The output of the cold-water outlet temperature sensor 30b (cold-water outlet temperature) and the output of the cold-water inlet temperature sensor 30c (cold-water inlet temperature) are inputted into the control device 33.

The operation point of the compressor of the centrifugal refrigerator is decided by a flow rate variable θ and a pressure variable Ω. As expressed in the following expressions, both of the flow rate variable θ and the pressure variable Ω include an acoustic velocity as a parameter, and therefore the acoustic velocity of the working fluid influences the design of the impeller of the compressor of the centrifugal refrigerator.

$$\text{Flow rate variable } \theta = \text{air flow rate } [\text{m}^3/\text{s}] \div \text{acoustic velocity } [\text{m/s}] \div (\text{impeller diameter } [\text{m}])^2$$

$$\text{Pressure variable } \Omega = \text{adiabatic head } [\text{m}] \times \text{gravitational acceleration } [\text{m/s}^2] \div (\text{acoustic velocity } [\text{m/s}])^2$$

In the present invention, the working fluid containing HCFO-1224yd, in particular, HCFO-1224yd has an acoustic velocity equivalent to that of HFC-245fa, and therefore the centrifugal refrigerator designed for HFC-245fa can be used without changing the design as in the above manner.

Note that when operating the heat cycle system, in order to avoid occurrence of a failure due to mixture of moisture and mixture of a noncondensing gas such as oxygen, it is preferable to provide a means for suppressing the mixture of them.

Moisture, if mixed into the heat cycle system, may cause problems when the heat cycle system is used particularly at low temperature. For example, problems such as freezing in a capillary tube, hydrolysis of the working fluid and lubricating oil, deterioration of material due to acid components generated by the hydrolysis, generation of contaminants and so on occur. In particular, when the lubricating oil is the polyglycol oil, the polyolester oil or the like, the lubricating oil is extremely high in hygroscopicity, is likely to cause a hydrolysis reaction, and decreases in characteristics as the lubricating oil, resulting in a major cause to lose the long-term reliability of the compressor.
Accordingly, to suppress the hydrolysis of the lubricating oil, it is necessary to control the moisture concentration in the heat cycle system.

Examples of the method of controlling the moisture concentration in the heat cycle system include a method of using a moisture remover such as a drying agent (silica gel, activated alumina, zeolite or the like) and so on. Bringing the drying agent into contact with a liquid working fluid or a working fluid composition containing it is preferable in terms of dehydration efficiency. For example, it is preferable to place the drying agent at an outlet of the condenser or an inlet of the evaporator so as to bring the drying agent into contact with the working fluid or the working fluid composition containing it.

As the drying agent, a zeolite-based drying agent is preferable in terms of chemical reactivity of the drying agent with the working fluid or the working fluid composition containing it, and hygroscopic capacity of the drying agent.

As the zeolite-based drying agent, a zeolite-based drying agent containing a compound expressed by following Formula (C) as a main component is preferable in terms of being excellent in hygroscopic capacity in the case of using a lubricating oil higher in moisture absorption amount than the conventional mineral-based lubricating oil.

$$M_{2/n}O \cdot Al_2O_3 \cdot xSiO_2 \cdot yH_2O \ldots \qquad (C)$$

In the formula, M is an element of Group 1 such as Na, K or the like or an element of Group 2 such as Ca or the like, n is a valence of M, x, y are values decided by a crystal structure. By changing M, the pore diameter can be adjusted.

For the selection of the drying agent, the pore diameter and the breaking strength are important. In the case of using a drying agent having a pore diameter larger than a molecular diameter of a component contained in the working fluid or the working fluid composition containing it (hereinafter, referred to as a "working fluid or the like"), the working fluid or the like is absorbed into the drying agent, and as a result, a chemical reaction occurs between the working fluid or the like and the drying agent, thereby causing unfavorable phenomena such as generation of a noncondensing gas, a decrease in strength of the drying agent, a decrease in adsorption capacity and so on.

Accordingly, it is preferable to use, as the drying agent, a zeolite-based drying agent having a small pore diameter. In particular, a sodium-potassium A type synthetic zeolite having a pore diameter of 3.5 angstroms or less is preferable. Applying the sodium-potassium A type synthetic zeolite having a pore diameter smaller than the molecular diameter of the working fluid or the like makes it possible to selectively absorb and remove only moisture in the heat cycle system without absorbing the working fluid or the like. In other words, since the absorption of the working fluid or the like to the drying agent is unlikely occur, thermal decomposition becomes less likely to occur, thereby making it possible to suppress deterioration of the material constituting the heat cycle system and generation of contaminants.

The size of the zeolite-based drying agent is preferably about 0.5 to 5 mm as a representative value of the particle size since the zeolite-based drying agent having a too-small size causes clogging of the valve or pipe small portions in the heat cycle system, whereas the zeolite-based drying agent having a too-large size decreases the drying ability. The shape of the zeolite-based drying agent is preferably granular or cylindrical.

The zeolite-based drying agent can be made into an arbitrary shape by solidifying powdery zeolite with a binder (bentonite or the like). As long as the zeolite-based drying agent is used as a main body, another drying agent (silica gel, activated alumina or the like) may be used together.

Further, the noncondensing gas, if entering the inside of the heat cycle system, has adverse effects such as failure of heat transfer in the condenser and the evaporator and an increase in working pressure, and therefore the mixture of the noncondensing gas needs to be suppressed as much as possible. In particular, oxygen being one noncondensing gas reacts with the working fluid and the lubricating oil to promote decomposition.

The concentration of the noncondensing gas is preferably 1.5 volume% or less and particularly preferably 0.5 volume% or less by volume percent with respect to the working fluid in a gas phase part of the working fluid.

[Heat cycle method]

The heat cycle method of the present invention is a heat cycle method performed using the heat cycle system of the present invention applying the working fluid containing HCFO-1224yd, in place of HFC-245fa, to the system for heat cycle designed to allow HFC-245fa to be applied thereto.

As described above, the working fluid containing HCFO-1224yd is almost equivalent in cycle performance to HFC-245fa, and therefore can perform a heat cycle having equivalent cycle performance to that in the case of using HFC-245fa without changing the operation conditions in the case of using HFC-245fa as the working fluid in the method of the present invention.

For example, in the case of performing the heat cycle using the centrifugal refrigerator of the present invention whose schematic configuration diagram is illustrated in Fig. 3, the setting of the control device 33 configured to control the opening degree of the inlet vane 32 that adjusts the working fluid flow rate, the instruction frequency sent from the inverter 35 to the electric motor 31, the opening degree of the expansion valve 23 and so on, and other setting are made almost the same as those in the case of using HFC-245fa as the working fluid, thereby obtaining the cycle performance almost the same as that in the case of using HFC-245fa as the working fluid.

In the heat cycle system and the heat cycle method using the same of the present invention as described above, by using a system for heat cycle designed to use HFC-245fa as it is and is thereby excellent in economic efficiency, and the cycle performance equal to or higher than in the case of using HFC-245fa can be obtained. Further, HCFO-1224yd used as the working fluid has low GWP, so that the working fluid, even if leaks, exerts a low burden on the environment.

REFERENCE SIGNS LIST

10 ... refrigeration cycle system, 11 ... compressor, 12 ... condenser, 13 ... expansion valve, 14 ... evaporator, 15 and 16 ... pump, 100 ... centrifugal refrigerator, 20 ... working fluid pipe, 21 ... centrifugal compressor, 22 ... condenser, 23 ... expansion valve, 24 ... evaporator, 31 ... electric motor, 32 ... inlet vane, 33 ... control device, 34 ... power supply, 35 ... inverter.

**Claims**

1. A heat cycle system comprising a working fluid and a system for heat cycle, wherein
   the system for heat cycle is suitable for 1,1,1,3,3-pentafluoropropane being used as a working fluid, and
   the working fluid contains 1-chloro-2,3,3,3-tetrafluoropropene.

2. The heat cycle system according to claim 1, wherein
   a ratio of 1-chloro-2,3,3,3-tetrafluoropropene to the working fluid is 40 to 100 mass%.

3. The heat cycle system according to claim 1 or 2, wherein
   the working fluid consists of 1-chloro-2,3,3,3-tetrafluoropropene.

4. The heat cycle system according to any one of claims 1 to 3, wherein
   a ratio of (Z)-1-chloro-2,3,3,3-tetrafluoropropene and (E)-1-chloro-2,3,3,3-tetrafluoropropene in the 1-chloro-2,3,3,3-tetrafluoropropene is 50:50 to 100:0 by mass ratio represented by (Z)-1-chloro-2,3,3,3-tetrafluoropropene: (E)-1-chloro-2,3,3,3-tetrafluoropropene.

**5.** The heat cycle system according to claim 4, wherein
the 1-chloro-2,3,3,3-tetrafluoropropene consists of (Z)-1-chloro-2,3,3,3-tetrafluoropropene.

**6.** The heat cycle system according to any one of claims 1 to 5, wherein
the heat cycle system is a refrigerating apparatus, an air-conditioning apparatus, a power generating system, a heat transport apparatus, or a secondary cooling machine.

**7.** The heat cycle system according to any one of claims 1 to 5, wherein
the heat cycle system is a centrifugal refrigerator.

**8.** The heat cycle system according to any one of claims 1 to 5, wherein
the heat cycle system is a low-pressure centrifugal refrigerator.

**9.** A heat cycle method using the heat cycle system according to any one of claims 1 to 8.

# FIG. 1

# FIG. 2

# FIG. 3

TO CONTROL DEVICE 33

TO CONTROL DEVICE 33

TO CONTROL DEVICE 33

FROM CONTROL DEVICE 33

TO CONTROL DEVICE 33

EP 3 418 651 A1

16

## INTERNATIONAL SEARCH REPORT

| International application No. |
| --- |
| PCT/JP2017/005955 |

**A. CLASSIFICATION OF SUBJECT MATTER**
*F25B1/00*(2006.01)i, *C09K5/04*(2006.01)i, *F25B1/053*(2006.01)i

According to International Patent Classification (IPC) or to both national classification and IPC

**B. FIELDS SEARCHED**

Minimum documentation searched (classification system followed by classification symbols)
F25B1/00, C09K5/04, F25B1/053

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2012/157763 A1  (Asahi Glass Co., Ltd.),<br>22 November 2012 (22.11.2012),<br>paragraphs [0009] to [0012], [0044] to [0046],<br>[0062] to [0065], [0083]; fig. 1; table 1<br>& US 2014/0077122 A1<br>paragraphs [0012] to [0025], [0083] to [0087],<br>[0114] to [0117], [0134]; fig. 1; table 1<br>& EP 2711406 A1        & CN 103534328 A | 1-3,6,9<br>4-5,7-8 |
| Y | JP 2014-504675 A  (E.I. Du Pont de Nemours &<br>Co.),<br>24 February 2014 (24.02.2014),<br>paragraph [0014]<br>& US 2013/0292599 A1<br>paragraph [0020]<br>& WO 2012/106565 A2     & EP 2957616 A1<br>& CN 103517963 A        & KR 10-2014-0053845 A | 4-5 |

☒ Further documents are listed in the continuation of Box C.          ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 19 April 2017 (19.04.17) | 09 May 2017 (09.05.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (January 2015)

**INTERNATIONAL SEARCH REPORT**

International application No.

PCT/JP2017/005955

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2008-531975 A  (E.I. Du Pont de Nemours & Co.), 14 August 2008 (14.08.2008), paragraphs [0041], [0057] & US 2006/0242985 A1 paragraphs [0052], [0068] & WO 2006/094304 A2      & EP 1877270 A1 | 7-8 |
| Y | WO 2014/130530 A1  (JOHNSON CONTROLS TECHNOLOGY CO.), 28 August 2014 (28.08.2014), paragraph [0005] & JP 2016-514241 A       & EP 2959238 A1 & KR 10-2015-0124450 A  & CN 105143789 A | 7-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012157763 A
- US 4249412 A
- JP H10502737 A

- JP 2007511645 A
- JP 2008500437 A
- JP 2008531836 A